(19) Europäisches Patentamt
European Patent Office
Office européen des brevets

(11) EP 4 796 501 A1

(12) **EUROPEAN PATENT APPLICATION**

(43) Date of publication:
**26.08.2026 Bulletin 2026/35**

(21) Application number: **26158195.3**

(22) Date of filing: **12.02.2026**

(51) International Patent Classification (IPC):
***C01G 53/506*** *(2025.01)* ***C01G 53/84*** *(2025.01)*
***H01M 4/525*** *(2010.01)*

(52) Cooperative Patent Classification (CPC):
**C01G 53/84; C01G 53/506; H01M 4/366; H01M 4/505; H01M 4/525;** C01P 2002/34; C01P 2002/52; C01P 2002/76; C01P 2004/54; C01P 2004/61; C01P 2004/62; C01P 2004/80; C01P 2006/40; H01M 2004/028; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.02.2025 JP 2025024197**

(71) Applicant: **Toyota Jidosha Kabushiki Kaisha**
**Toyota-shi, Aichi-ken 471-8571 (JP)**

(72) Inventors:
- **PROCTER, Momoko**
  **Toyota-shi, 471-8571 (JP)**
- **MAHARA, Yuji**
  **Toyota-shi, 471-8571 (JP)**
- **KINOSHITA, Taku**
  **Toyota-shi, 471-8571 (JP)**

(74) Representative: **Kuhnen & Wacker**
**Patent- und Rechtsanwaltsbüro PartG mbB**
**Prinz-Ludwig-Straße 40 A**
**85354 Freising (DE)**

# (54) COMPOSITE CATHODE ACTIVE MATERIAL

(57) Provided is a composite cathode active material configured to decrease the rate of resistance increase that is due to battery charge and discharge, the composite cathode active material comprising a cathode active material, a compound A comprising La, Ni and O, and a compound B comprising Li, W and O, wherein the cathode active material is a crystalline primary particle comprising Li, a transition metal and O; wherein the cathode active material is a single-crystal type active material comprising the primary particle; wherein the compound B is present in a coating layer form on at least part of a surface of the primary particle; and wherein the compound A is independently present as isolated particles.

FIG. 1

100
10
30
20



Processed by Luminess, 75001 PARIS (FR)

## Description

TECHNICAL FIELD

The disclosure relates to a composite cathode active material.

BACKGROUND

Various studies have been proposed for cathode active materials as disclosed in Patent Documents 1 and 2.

Patent Document 1: Japanese translation of PCT international application No. 2022-542774
Patent Document 2: Japanese translation of PCT international application No. 2024-511223

Various cathode active materials have been proposed for obtaining cathodes that have high battery characteristics such as high cycle characteristics and high output characteristics.
When used in batteries, conventional cathode active materials have room for improvement in the rate of resistance increase that is due to battery charge and discharge.

SUMMARY

The present disclosure was achieved in light of the above circumstances. An object of the present disclosure is to provide a composite cathode active material configured to decrease the rate of resistance increase that is due to battery charge and discharge.
The present disclosure includes the following embodiments.

<1> A composite cathode active material comprising a cathode active material, a compound A comprising La, Ni and O, and a compound B comprising Li, W and O,

wherein the cathode active material is a crystalline primary particle comprising Li, a transition metal and O;
wherein the cathode active material is a single-crystal type active material comprising the primary particle;
wherein the compound B is present in a coating layer form on at least part of a surface of the primary particle; and
wherein the compound A is independently present as isolated particles.

<2> The composite cathode active material according to the above <1>, wherein a content of La in the composite cathode active material is 0.005 mol or more and 2.000 mol or less with respect to 1 mol that is a total of the Ni, Co and Mn contained in the cathode active material.
<3> The composite cathode active material according to the above <1> or <2>, wherein a content of W in the composite cathode active material is 0.010 mol or more and 1.000 mol or less with respect to 1 mol that is a total of the Ni, Co and Mn contained in the cathode active material.
<4> The composite cathode active material according to any one of the above <1> to <3>, wherein a particle diameter of the primary particle that is the cathode active material is 0.5 μm or more.
<5> The composite cathode active material according to any one of the above <1> to <4>, wherein an average particle diameter of the isolated particles that is the compound A is 0.1 μm or more and 20 μm or less.
<6> The composite cathode active material according to any one of the above <1> to <5>, wherein the compound A is $La_4LiNiO_8$.
<7> The composite cathode active material according to any one of the above <1> to <6>, wherein the compound B is at least one selected from the group consisting of $Li_2WO_4$ and $Li_6WO_6$.
<8> A cathode layer comprising the composite cathode active material defined by any one of the above <1> to <7>.
<9> A battery comprising a cathode layer comprising the composite cathode active material defined by any one of the above <1> to <7>.
<10> A method for producing the composite cathode active material defined by any one of the above <1> to <7>, the method comprising:

a first sintering step of obtaining the cathode active material by sintering a first mixture of a transition metal hydroxide, which is a precursor of the cathode active material, and a lithium compound at a temperature of from 800°C to 1000°C,
a second sintering step of obtaining a sintered product comprising, by sintering a second mixture of the cathode active material and a W source that is a raw material for the compound B at a temperature of from 500°C to 700°C,

the cathode active material and the compound B that is present in the coating layer form on at least part of the surface of the primary particle, and
a third sintering step of obtaining the composite cathode active material by sintering a third mixture of the sintered product and a La source that is a raw material for the compound A at a temperature of from 800°C to 1100°C.

According to the present disclosure, a composite cathode active material configured to decrease the rate of resistance increase that is due to battery charge and discharge, is provided.

BRIEF DESCRIPTION OF THE DRAWING

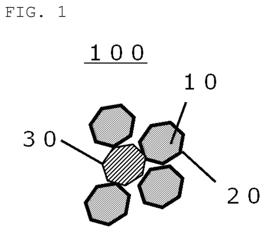

FIG. 1 is an image showing an exemplary structure of the composite cathode active material of the present disclosure.

DETAILED DESCRIPTION

Hereinafter, the embodiments of the present disclosure will be described in detail. Matters that are required to implement the present disclosure (such as common structures and production processes of composite cathode active materials not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art.
In addition, dimensional relations (such as length, width and thickness) in the drawings do not reflect actual dimensional relations.
In the present disclosure, unless otherwise noted, a singular noun may encompass a plural noun. For example, the word "particle" may encompass "particles" (a group of particles).
In the present disclosure, an example of the method for calculating the average particle diameter of particles is as follows. First, for a particle shown in an image taken at an appropriate magnification (e.g., 50,000x to 1,000,000x) with a transmission electron microscope (hereinafter referred to as TEM) or a scanning electron microscope (hereinafter referred to as SEM), the diameter when the particle is considered spherical, is calculated. Such a particle diameter calculation by TEM or SEM observation is carried out on 2 to 300 particles of the same type, and the average of the diameters of the particles is determined as the average particle diameter.

1. Composite cathode active material

According to the present disclosure, provided is a composite cathode active material comprising a cathode active material, a compound A comprising La, Ni and O, and a compound B comprising Li, W and O,

wherein the cathode active material is a crystalline primary particle comprising Li, a transition metal and O;
wherein the cathode active material is a single-crystal type active material comprising the primary particle;
wherein the compound B is present in a coating layer form on at least part of a surface of the primary particle; and
wherein the compound A is independently present as isolated particles.

As for a sintered product obtained by sintering a conventional cathode active material containing Li, Ni, Co and Mn, during the sintering of the cathode active material, a structural change is caused by Ni deoxidation, and a single-crystal particle formed by the sintering is turned into rock salt. Accordingly, when the sintered product is used in batteries, the reaction resistance of the batteries increases. As the particle diameter of the single-crystal particle decreases, the contact area between the particle and the electroconductive material contained in the cathode layer decreases, resulting in a decrease in the electron conductivity of the cathode active material.
To increase the electron conductivity, adding the La-containing compound A, which is excellent in electron conductivity, to the cathode active material may be possible. To decrease the reaction resistance, adding the W-containing compound B, which is excellent in Li conductivity, to the cathode active material may be possible. However, in the case of mixing the transition metal hydroxide, which is the precursor of the cathode active material, with the La and W sources and sintering the mixture, a layer in which the La-containing compound A and the W-containing compound B are mixed is formed on the surface of the produced cathode active material, and a Li conductivity increasing effect and an electron conductivity increasing effect are less likely to be obtained.
In the present disclosure, the cathode active material is produced; then, the mixture of the cathode active material and the W source is sintered at a medium temperature of from 500°C to 700°C to attach the W-containing compound B to the surface of the primary particle of the cathode active material; the La source is added thereto; and the mixture is sintered

at a high temperature of from 800°C to 1000°C, thereby obtaining the composite cathode active material having the structure of the present disclosure. According to the present disclosure, it is a composite cathode active material having a structure balanced between the Li conductivity increasing effect that is exerted by the W-containing compound B and the electron conductivity increasing effect that is exerted by the La-containing compound A.

FIG. 1 is an image showing an exemplary structure of the composite cathode active material of the present disclosure. As shown in FIG. 1, in a composite cathode active material 100 (the composite cathode active material of the present disclosure), a coating layer (a compound B 20 in a coating layer form) is present on the surface of a primary particle 10 (the cathode active material), and a compound A 30 is independently present as an isolated particle on the surface of the compound B 20.

The composite cathode active material contains the cathode active material, the compound A and the compound B.

The composite cathode active material is a composite cathode active material for a battery. The details of the battery will be described later.

The composite cathode active material may be particles. The composite cathode active material particles may be secondary particles.

The average particle diameter of the composite cathode active material particles may be 0.5 $\mu$m or more, for example. The average particle diameter of the composite cathode active material particles may be 30 $\mu$m or less, for example.

The cathode active material is a lithium-transition metal composite oxide containing Li, a transition metal (TM) and O. The lithium-transition metal composite oxide may contain one transition metal, may contain two transition metals, may contain three transition metals, or may contain 4 or more transition metals. As the transition metal, examples include, but are not limited to, Ti, V, Cr, Mn, Fe, Co, Ni, Zr and Nb.

As the transition metal, the lithium-transition metal composite oxide may contain at least Ni. As the transition metal, it may further contain Co, Mn and so on.

In addition to the Li and the transition metal, the lithium-transition metal composite oxide may contain a metal $M^1$ which is a metal different from the Li and the transition metal and which may be a semimetal. As the different metal $M^1$, examples include, but are not limited to, Al, Si, Ga, Ge, In and Sn.

The lithium-transition metal composite oxide may contain Li, Ni, Co, Mn and O, or it may contain Li, Ni, Co, Al and O.

With respect to 1 mol that is the total of all the metals (excluding the Li) contained in the lithium-transition metal composite oxide, the total amount of the Ni, Co and Mn contained in the lithium-transition metal composite oxide is 0.80 mol or more, for example. The total amount may be 0.90 mol or more, or it may be 0.85 mol. The total amount of the Ni, Co and Mn encompasses such a case, that the amount of one or two of the Ni, Co and Mn is 0.

The lithium-transition metal composite oxide may have a composition represented by the general formula LixNiaCobMncOy (where $0.1 \le x \le 1.5$; $0.5 \le a \le 1.0$; $0 \le b \le 0.3$; $0 \le c \le 0.3$; $a+b+c = 1.0$; and $1.5 \le y \le 2.1$).

In the general formula, the Li composition ratio "x" is only required to satisfy the relationship of $0.1 \le x \le 1.5$. For example, the Li composition ratio "x" may be 0.4 or more, 0.6 or more, 0.8 or more, 1.0 or more, or 1.05 or more. For example, the Li composition ratio "x" may be 1.4 or less, or it may be 1.2 or less.

In the above general formula, the O composition ratio "y" is only required to satisfy the relationship of "$1.5 \le y \le 2.1$". For example, the O composition ratio "y" may be 1.6 or more, 1.7 or more, 1.8 or more, or 1.9 or more. For example, the O composition ratio "y" may be 2.0 or less.

In the above general formula, the Ni composition ratio "a", the Co composition ratio "b" and the Mn composition ratio "c" satisfy the relationship of "$a+b+c = 1.0$".

In the above general formula, the Ni composition ratio "a" is only required to satisfy the relationship of "$0.5 \le a \le 1.0$". For example, the Ni composition ratio "a" may be 0.6 or more, 0.7 or more, 0.8 or more, or 0.85 or more. For example, the Ni composition ratio "a" may be 0.9 or less.

In the above general formula, the Co composition ratio "b" is only required to satisfy the relationship of "$0 \le b \le 0.3$". For example, the Co composition ratio "b" may be 0.01 or more, 0.02 or more, 0.03 or more, 0.04 or more, 0.05 or more, 0.06 or more, 0.07 or more, or 0.075 or more. For example, the Co composition ratio "b" may be 0.25 or less, 0.20 or less, 0.15 or less, 0.10 or less, 0.09 or less, or 0.08 or less.

In the above general formula, the Mn composition ratio "c" is only required to satisfy the relationship of "$0 \le c \le 0.3$". For example, the Mn composition ratio "c" may be 0.01 or more, 0.02 or more, 0.03 or more, 0.04 or more, 0.05 or more, 0.06 or more, 0.07 or more, or 0.075 or more. For example, the Mn composition ratio "c" may be 0.25 or less, 0.20 or less, 0.15 or less, 0.10 or less, 0.09 or less, or 0.08 or less.

A desired dopant may be added to the lithium-transition metal composite oxide. The dopant shows an element other than Li, Ni, Co, Mn and O. For example, the dopant may include at least one selected from the group consisting of Zr, Mo, Mg, Ca, Na, Fe, Cr, Zn, Si, Sn, Al and Ag. For example, the composition ratio of the dopant may be 0.005 or more, 0.01 or more, 0.02 or more, 0.03 or more, or 0.04 or more. For example, the composition ratio of the dopant may be 0.05 or less,

0.04 or less, 0.03 or less, 0.02 or less, or 0.01 or less.

The cathode active material is the crystalline primary particle.

The cathode active material is the single-crystal type active material composed of the primary particle. The single-crystal type active material means that it is not a so-called polycrystal type active material (an active material composed of closely aggregated primary particles). That is, the single-crystal type active material may be a single-crystal particle. Compared to the polycrystal type active material, the single-crystal type active material has the advantage of less deterioration over time.

In a SEM image, the single-crystal type active material appears as one non-aggregated, independent particle (a primary particle). In a SEM image, the single-crystal type active material appears not to have a grain boundary. The magnification of the SEM image may be from 10,000x to 30,000x, for example.

The crystal structure of the cathode active material may be a layered rock salt structure. Also, the cathode active material may have a crystal structure belonging to space group R-3m.

The particle diameter of the primary particle that is the cathode active material may be 0.5 μm or more, may be 0.6 μm or more, may be 0.8 μm or more, or may be 1.0 μm or more. When the particle diameter of the primary particle is too small, there is a possibility that the particles is a poorly grown particle and has a difficulty in being produced as a single crystal. On the other hand, the particle diameter of the primary particle is 10 μm or less, for example, and it may be 5 μm or less. The particle diameter of the primary particle can be obtained as the longest diameter in a TEM or SEM image. For example, when the cathode layer contains the primary particle (the cathode active material), the particle diameter of the primary particle may be obtained from the longest diameter of the primary particle shown in a SEM cross-sectional image of the cathode layer. As used herein, the particle diameter of the primary particle is not the average particle diameter. That is, when the cathode active material contains a plurality of the primary particles, the particle diameter of the primary particle means the particle diameter of each primary particle.

The primary particle that is the lithium-transition metal composite oxide (the cathode active material) may be free of La and W, or it may contain La and W at an amount of less than 0.005 mol.

The compound A contains La, Ni and O. The compound A may be composed of only La, Ni and O, or it may further contain a different element. As the different element, examples include, but are not limited to, Li. That is, the compound A may contain or may be free of Li. An example of the composition of the compound A is $La_aNi_bO_c$ (where $0.8 \leq a \leq 1.2$; $0.8 \leq b \leq 1.2$; and $2.8 \leq c \leq 3.2$). For example, $LaNiO_3$ is a typical composition of perovskite, and it has good electron conductivity. Another example of the composition of the compound A is $La_aLi_bNi_cO_d$ (where $3.5 \leq a \leq 4.5$; $0.5 \leq b \leq 1.5$; $0.5 \leq c \leq 0.8$; and $7.5 \leq d \leq 8.5$).

The compound A may be $La_4LiNiO_8$ or the like. $La_4LiNiO_8$ is known to have good electron conductivity and is supposed to have a similar crystal phase to perovskite.

The compound A may have the crystal phase of perovskite or a similar crystal phase to perovskite. The compound A may have the crystal phase of at least one selected from the group consisting of $LaNiO_3$ and $La_4LiNiO_8$. This is because good electron conductivity is obtained. The crystal phase may include a crystal phase in which a part of a constitutional atom (such as a part of the O atom) is absent, or it may include a crystal phase in which a part of a constitutional atom (such as a part of the La atom) is excessively present.

The compound A is independently present as the isolated particles. The compound A may be present on the surface of the compound B.

The isolated particles appear as independent particles in a SEM image. The isolated particles may be primary or secondary particles. In a cross-sectional image of the compound A, when the length of the compound A in the normal direction of the surface of the compound A is determined as $L_1$ and when the length of the compound A in a direction perpendicular to the normal direction is determined as $L_2$, the ratio of $L_2$ to $L_1$ ($L_2/L_1$) may be 3.0 or less. The cross-sectional image of the compound A is a SEM cross-sectional image, for example.

The average particle diameter of the isolated particles that is the compound A may be 0.1 μm or more and 20 μm or less.

With respect to 1 mol that is the total of the metals (excluding the Li) contained in the cathode active material, the amount of the La contained in the compound A of the composite cathode active material may be 0.005 mol or more and 2.000 mol or less, for example. Also, with respect to 1 mol that is the total of the Ni, Co and Mn contained in the cathode active material, the amount of the La contained in the compound A of the composite cathode active material may be 0.005 mol or more and 2.000 mol or less, for example. When the amount of the La contained in the composite cathode active material is too small, the electron conductivity is not increased. When the amount of the La contained in the composite cathode active material is too large, Li conduction is inhibited.

The volume percent of the compound A that is the isolated particles contained in the composite cathode active material, may be from 0.005% by volume to 75% by volume.

The compound B contains Li, W and O. The compound B may be composed on only Li, W and O, or it may further contain a different element. An example of the compound B is $Li_aW_bO_c$ (where $5.5 \leq a \leq 6.5$; $0.5 \leq b \leq 1.5$; and $5.5 \leq c \leq 6.5$). The compound B having this composition is typically $Li_6WO_6$. Another example of the composition of the compound B is

$Li_aW_bO_c$ (where $1.5 \leq a \leq 2.5$; $0.5 \leq b \leq 1.5$; and $3.5 \leq c \leq 4.5$). The compound B having this composition is typically $Li_2WO_4$.

The compound B may be at least one selected from the group consisting of $Li_2WO_4$ and $Li_6WO_6$.

The compound B is only required to be present in the coating layer form on at least part of the surface of the primary particle that is the cathode active material. The compound B may be present in the coating layer form on the whole surface of the primary particle that is the cathode active material. In a cross-sectional image of the composite cathode active material, when the length of the compound B (in the coating layer form) in the normal direction of the surface of the composite cathode active material is determined as $L_3$ and when the length of the compound B in a direction perpendicular to the normal direction is determined as $L_4$, the ratio of $L_4$ to $L_3$ ($L_4/L_3$) may be larger than 3.0. The cross-sectional image of the composite cathode active material is a TEM cross-sectional image, for example.

That is, in the composite cathode active material, the coating layer composed of the compound B may be present on at least part of the surface of the primary particle that is the cathode active material; the coating layer may coat 50% or more of the surface area of the primary particle that is the cathode active material; or the coating layer may be present on the whole surface of the primary particle that is the cathode active material. The surface coverage by the coating layer composed of the compound B can be obtained by TEM observation, for example.

For example, the coating layer composed of the compound B can be confirmed by compositional analysis (elemental analysis) of a TEM image, which is obtained by the TEM observation, by energy dispersive X-ray spectrometry (EDX). The compositional analysis can be carried out by a known method such as TEM-EDX, SEM-EDX and X-ray photoelectron spectroscopy (XPS).

The thickness of the coating layer composed of the compound B is not particularly limited. The thickness is 0.5 nm or more and 20 nm or less, for example, and it may be 1 nm or more and 15 nm or less. The thickness of the coating layer composed of the compound B, is obtained as the average of the thicknesses of at least 5 points of the coating layer measured in the TEM observation of the primary particle that is the cathode active material.

The compound B may be crystalline or amorphous. A crystalline compound means that a peak derived from a target compound is confirmed by X-ray diffractometry using CuK$\alpha$ radiation. An amorphous compound means that a peak derived from a target compound is not confirmed by X-ray diffractometry using CuK$\alpha$ radiation. When a target compound is amorphous, a halo pattern may show up instead of a peak.

With respect to 1 mol that is the total of the metals (excluding the Li) contained in the cathode active material, the amount of the W contained in the compound B of the composite cathode active material may be 0.010 mol or more and 1.000 mol or less, for example. Also, with respect to 1 mol that is the total of the Ni, Co and Mn contained in the cathode active material, the amount of the W contained in the compound B of the composite cathode active material may be 0.010 mol or more and 1.000 mol or less, for example.

When the amount of the W contained in the composite cathode active material is too small, the Li conductivity is not increased. When the amount of the W contained in the composite cathode active material is too large, electron conduction is inhibited.

The volume percent of the compound B in the coating layer form contained in the composite cathode active material, may be from 0.010% by volume to 50% by volume.

## 2. Method for producing the composite cathode active material

According to the present disclosure, provided is a method for producing the above-described composite cathode active material, the method comprising:

a first sintering step of obtaining the cathode active material by sintering a first mixture of a transition metal hydroxide, which is a precursor of the cathode active material, and a lithium compound at a temperature of from 800°C to 1000°C,
a second sintering step of obtaining a sintered product comprising, by sintering a second mixture of the cathode active material and a W source that is a raw material for the compound B at a temperature of from 500°C to 700°C, the cathode active material and the compound B that is present in the coating layer form on at least part of the surface of the primary particle, and
a third sintering step of obtaining the composite cathode active material by sintering a third mixture of the sintered product and a La source that is a raw material for the compound A at a temperature of from 800°C to 1100°C.

The composite cathode active material production method of the present disclosure includes (1) the first sintering step, (2) the second sintering step and (3) the third sintering step.

### (1) First sintering step

The first sintering step is a step of obtaining the cathode active material by sintering the first mixture of the transition metal hydroxide, which is the precursor of the cathode active material, and the lithium compound at a

temperature of from 800°C to 1000°C.

The method for producing the precursor of the cathode active material of the present disclosure is not particularly limited, and it may be the following method, for example.

First, the raw material aqueous solution of the transition metal hydroxide is prepared. As the method for producing the raw material aqueous solution, examples include, but are not limited to, dissolving a water-soluble transition metal compound in water. As the transition metal compound, examples include, but are not limited to, a metal salt such as sulfate salt and nitrate salt. As the Ni source, examples include, but are not limited to, $NiSO_4$ and $Ni(NO_3)_2$. As the Co source, examples include, but are not limited to, $CoSO_4$, $Co(NO_3)_2$ and $Co(NO_3)_3$. As the Mn source, examples include, but are not limited to, $MnSO_4$ and $Mn(NO_3)_2$. The composition of the raw material aqueous solution is appropriately adjusted depending on the target cathode active material.

Next, a certain amount of $NH_3$ aqueous solution is put in a reaction container. While stirring the $NH_3$ aqueous solution with a stirrer or the like, the atmosphere inside the reaction container is replaced with an unoxidized atmosphere by nitrogen purging. The nitrogen gas flow rate of the nitrogen purging is not particularly limited. For example, it may be from 2 L/min to 6 L/min.

Then, a sodium hydroxide aqueous solution is put in the reaction container. While keeping the pH of the sodium hydroxide aqueous solution alkaline (e.g., pH 11.3 to pH 12.0), the raw material aqueous solution and another $NH_3$ aqueous solution are added dropwise to the reaction container for 5 to 15 hours, thereby developing a reaction. The reaction temperature is not particularly limited. For example, it may be 50°C or more and 65°C or less.

After the end of the reaction, the reactant is pre-sintered. It can be carried out at 120°C to 220°C for 4 to 10 hours at 0.2 MPa to 1.0 MPa, for example.

After the end of the pre-sintering, a product thus obtained is washed with water and then filtered, thereby obtaining a transition metal hydroxide. The obtained transition metal hydroxide is subjected to a drying treatment. The drying treatment can be carried out at 110°C for 10 to 12 hours, for example.

In the present disclosure, the transition metal hydroxide contains a transition metal. The transition metal hydroxide may be a nickel-cobalt-manganese composite hydroxide containing nickel (Ni), cobalt (Co) and manganese (Mn). In the nickel-cobalt-manganese composite hydroxide, the ratio (molar ratio) of each metal species to the total amount of the nickel, cobalt and manganese is the same as the composition ratio represented by the above general formula in the cathode active material.

The lithium compound (the Li source) may be, for example, at least one selected from the group consisting of lithium carbonate, lithium nitrate, lithium acetate, lithium hydroxide, lithium oxide, lithium chloride and the like. The lithium compound may be lithium hydroxide. The molar ratio of the Li of the Li source to the TM contained in the transition metal hydroxide may be, for example, 0.4 or more, 0.6 or more, 0.8 or more, 1.0 or more, or 1.05 or more. It may be 1.4 or less or may be 1.2 or less.

The ratio between the lithium compound and precursor in the mixture is adjusted so that the ratio (molar ratio) of the lithium and the different metal species to the total amount of the lithium in the target cathode active material and the metal species contained in the precursor, is typically equal to the ratio (molar ratio) of the lithium and different metal species in the first mixture. The method for mixing them is not particularly limited, and a known method may be employed.

The first mixture may contain molten salt. Since the molten salt functions as a flux, the primary particle can be sufficiently grown. The molten salt may contain Li. As the molten salt, examples include, but are not limited to, lithium hydroxide. The molar ratio (Li/TM) of the Li contained in the molten salt to the TM contained in the transition metal hydroxide is 0.01 or more, for example. It may be 0.05 or more, may be 0.10 or more, or may be 0.15 or more. On the other hand, the Li/TM ratio is 0.60 or less, for example. It may be 0.50 or less, may be 0.40 or less, or may be 0.30 or less.

As the Li source and the molten salt, the first mixture may contain lithium hydroxide. The molar ratio (Li'/TM) of the Li contained in the Li source and the molten salt to the TM contained in the transition metal hydroxide is 1.01 or more, for example. It may be 1.05 or more, may be 1.10 or more, or may be 1.15 or more. On the other hand, the Li'/TM ratio is 1.60 or less, for example. It may be 1.50 or less, may be 1.40 or less, or may be 1.30 or less.

The cathode active material that is the lithium-transition metal composite oxide is obtained by sintering the first mixture at a temperature of from 800°C to 1000°C for 8 to 15 hours, for example. To sinter the first mixture, a known furnace such as a muffle furnace can be used.

The sintering temperature of the first sintering step may be 850°C or more, 900°C or more, or 950°C or more.

The sintering time of the first sintering step may be 9 hours or more, or it may be 10 hours or more.

The sintering time of the first sintering step may be 13 hours or less, or it may be 11 hours or less.

In general, the cathode active material obtained by sintering the precursor of the present disclosure is the single-crystal type active material composed of the primary particle.

(2) Second sintering step

The second sintering step is a step of obtaining the sintered product comprising, by sintering the second mixture

of the cathode active material and the W source that is a raw material for the compound B at a temperature of from 500°C to 700°C, the cathode active material and the compound B that is present in the coating layer form on at least part of the surface of the primary particle.

As the W source that is a raw material for the compound B, examples include, but are not limited to, $H_2WO_4$. The amount of the added W source is appropriately adjusted depending on the target composite cathode active material.

In the second sintering step, by sintering the second mixture at a temperature of from 500°C to 700°C, transformation of the compound B into isolated particles is suppressed, and on the surface of the primary particle that is the cathode active material, the compound B can be more preferentially formed in the coating layer form than the compound A.

The sintering temperature of the second sintering step may be 550°C or more, 600°C or more, or 650°C or more.

The sintering time of the second sintering step may be one hour or more, 9 hours or more, or 10 hours or more. On the other hand, the sintering time of the second sintering step may be 15 hours or less, 13 hours or less, or 11 hours or less.

(3) Third sintering step

The third sintering step is a step of obtaining the composite cathode active material by sintering the third mixture of the sintered product and the La source that is a raw material for the compound A at a temperature of from 800°C to 1100°C.

As the La source that is a raw material for the compound A, examples include, but are not limited to, $La(OH)_3$, $LaSO_4$ and $La(NO_3)_3$. The amount of the added La source is appropriately adjusted depending on the target composite cathode active material.

In the third sintering step, by sintering the third mixture at a temperature of from 800°C to 1100°C, transformation of the compound A into the isolated particles is promoted.

The sintering temperature of the third sintering step may be 850°C or more, 900°C or more, 950°C or more, 1000°C or more, or 1050°C or more.

The sintering time of the third sintering step may be one hour or more, 9 hours or more, or 10 hours or more. On the other hand, the sintering time of the third sintering step may be 15 hours or less, 13 hours or less, or 11 hours or less.

3. Battery

The composite cathode active material provided by the present disclosure can be used as, for example, a cathode active material for forming the cathode of a battery such as a lithium ion battery. That is, in the present disclosure, a battery which a cathode, an electrolyte layer and an anode are stacked in this order and which the cathode contains the composite cathode active material of the present disclosure, is provided.

According to the present disclosure, by using the above-described composite cathode active material in the battery, the rate of resistance increase that is due to battery charge and discharge is decreased.

Hereinafter, the battery will be described in detail.

[Cathode]

The cathode includes the cathode layer. As needed, it further includes a cathode collector.

The cathode layer is a layer which contains at least the above-described composite cathode active material of the present disclosure as the cathode active material.

The cathode layer may be disposed on one surface of the cathode collector, or it may be disposed on both surfaces of the cathode collector. The cathode may have a multi-layered structure by forming two or more cathode layers on at least one surface of the cathode collector. In the case of forming two or more cathode layers, the cathode active materials contained in the cathode layers may be the same type of cathode active material, or they may be different types of cathode active materials.

The cathode active material used in the cathode layer may contain only the composite cathode active material of the present disclosure, or it may further contain a different active material. As needed, the cathode layer may contain at least one selected from the group consisting of an electrolyte, an electroconductive material and a binder.

For example, the mixing ratio (mass ratio) between the composite cathode active material and the different active material may be as follows: "the composite cathode active material/the different active material = 9.5/0.5 to 0.5/9.5", "the composite cathode active material/the different active material = 9/1 to 1/9", "the composite cathode active material/the different active material = 8/2 to 2/8", "the composite cathode active material/the different active material = 7/3 to 3/7" or "the composite cathode active material/the different active material = 6/4 to 4/6". The different active material may be a polycrystal type active material (polycrystal particles) composed of the secondary particles that are the above-described lithium-transition metal composite oxide. Also, the different active material may be, for example, lithium iron phosphate

(olivine structure), lithium manganese phosphate (olivine structure), manganese iron phosphate (olivine structure), $LiMnO_2$ (rock salt structure), $Li(NiMn)_2O_4$ (spinel structure), $LiCoO_2$ (layered structure) or the like.

The percentage of the cathode active material in the cathode layer is 20% by mass or more, for example. It may be 30% by mass or more, or it may be 40% by mass or more. When the percentage of the cathode active material is too small, there is a possibility that a sufficient energy density is not obtained. On the other hand, the percentage of the cathode active material in the cathode layer is 95% by mass or less, for example. It may be 70% by mass or less, or it may be 60% by mass or less. When the percentage of the cathode active material is too large, the ion conductivity and electron conductivity of the cathode layer may relatively decrease.

As the electrolyte, examples include, but are not limited to, a solid electrolyte. The solid electrolyte may be an inorganic solid electrolyte such as a sulfide solid electrolyte, a halide solid electrolyte, an oxide solid electrolyte and a complex hydride solid electrolyte, or it may be an organic solid electrolyte such as a gel electrolyte.

The sulfide solid electrolyte is an electrolyte which contains a S element. In general, the sulfide solid electrolyte contains at least a Li element and a S element. The sulfide solid electrolyte may further contain a M element (M is at least one selected from the group consisting of P, As, Sb, Si, Ge, Sn, B, Al, Ga and In). Also, the sulfide solid electrolyte may contain a halogen element such as F, Cl, Br and I.

The sulfide solid electrolyte may be a glass-based (amorphous) sulfide solid electrolyte, may be a glass-ceramic-based sulfide solid electrolyte, or may be a crystal-based sulfide solid electrolyte. The sulfide solid electrolyte may have a crystal phase. As the crystal phase, examples include, but are not limited to, a Thio-LISICON-type crystal phase, an argyrodite-type crystal phase and a LGPS-type crystal phase.

The composition of the sulfide solid electrolyte is not particularly limited. As the composition, examples include, but are not limited to, $xLi_2S\cdot(1-x)P_2S_5$ (where $0.5 \leq x < 1$) and $yLiI\cdot zLiBr\cdot(100-y-z)(xLi_2S\cdot(1-x)P_2S_5)$ (where $0.5 \leq x < 1$, $0 \leq y \leq 30$ and $0 \leq z \leq 30$). In these compositions, x may satisfy $0.7 \leq x \leq 0.8$. Another example of the composition of the sulfide solid electrolyte is $Li_{7-x}PS_{6-x}X_x$ (where X is at least one selected from the group consisting of F, Cl, Br and I, and x satisfies $0 \leq x < 2$). Another example of the composition of the sulfide solid electrolyte is $Li_{4-x}Me_{1-x}P_xS_4$ (where $0 < x < 1$ and Me is at least one selected from the group consisting of Al, Zn, In, Ge, Si, Sn, Sb, Ga and Bi). As the sulfide solid electrolyte, examples include, but are not limited to, $LiI$-$LiBr$-$Li_2S$-$P_2S_5$, $LiI$-$Li_2S$-$P_2S_5$, $LiI$-$Li_2S$-$P_2O_5$ and $LiI$-$Li_3PO_4$-$P_2S_5$.

As the oxide solid electrolyte, examples include, but are not limited to, a substance having a garnet-type crystal structure containing a Li element, La element, an A element (A is at least one selected from the group consisting of Zr, Nb, Ta and Al) and an O element. For example, the oxide solid electrolyte may be $Li_2O$-$B_2O_3$-$P_2O_5$, $Li_2O$-$SiO_2$, $Li_2O$-$B_2O_3$, $Li_{1.3}Al_{0.3}Ti_{0.7}(PO_4)_3$, $Li_5La_3Ta_2O_{12}$, $Li_7La_3Zr_2O_{12}$, $Li_6BaLa_2Ta_2O_{12}$, $Li_{3.6}Si_{0.6}P_{0.4}O_4$, $Li_4SiO_4$, $Li_3PO_4$, $Li_{3+x}PO_{4-x}N_x$ (where $1 \leq x \leq 3$) or the like.

For example, the halide solid electrolyte may be a solid electrolyte containing Li, D and X (D is at least one selected from the group consisting of Ti, Al and Y, and X is F, Cl or Br).

The gel electrolyte may contain an electrolytic solution and a polymer material. The polymer material may be a material forming a polymer matrix. For example, the polymer material may contain at least one selected from the group consisting of polyvinylidene fluoride (PVdF), poly(vinylidene fluoride-co-hexafluoropropylene) (PVDF-HFP), polyacrylonitrile (PAN), PVdF-PAN, polyethylene oxide (PEO), polyethylene glycol (PEG) and derivatives thereof.

The form of the solid electrolyte may be a particulate form, from the viewpoint of good handleability.

The average particle diameter of the solid electrolyte particles is not particularly limited. It may be from 1 nm to 100 μm.

The percentage of the solid electrolyte in the cathode layer may be 1% by mass or more, for example. When the percentage of the solid electrolyte is too small, the cathode layer may have a shortage of ion conducting paths. On the other hand, the percentage of the solid electrolyte in the cathode layer may be 60% by mass or less, for example. When the percentage of the solid electrolyte is too large, the percentage of the cathode active material is relatively small, and a low energy density may be obtained.

The cathode layer may contain an electroconductive material. The electron conductivity of the cathode layer is increased by adding the electroconductive material. As the electroconductive material, examples include, but are not limited to, a carbonaceous electroconductive material, metal particles and an electroconductive polymer. As the carbonaceous electroconductive material, examples include, but are not limited to, a particulate material such as Acetylene Black (AB) and Ketjen Black (KB) and a fibrous material such as vapor-grown carbon fiber (VGCF), carbon nanotube (CNT) and carbon nanofiber (CNF) .

The percentage of the electroconductive material in the cathode layer may be 0.1% by mass or more, for example. When the percentage of the electroconductive material is too small, the cathode layer may have a shortage of electron conducting paths. On the other hand, the percentage of the electroconductive material in the cathode layer may be 5% by mass or less, for example. When the percentage of the electroconductive material is too large, the percentage of the cathode active material is relatively small, and a low energy density may be obtained.

The cathode layer may contain a binder. As the binder, examples include, but are not limited to, styrene-butadiene rubber (SBR), polyimide (PI), polyacrylic acid (PAA), acrylonitrile-butadiene rubber (NBR), butadiene rubber

(BR), polyvinylidene fluoride (PVdF), polytetrafluoroethylene (PTFE), a styrene-isoprene-styrene block copolymer (SIS) and an ethylene-propylene-diene copolymer (EPDM).

The percentage of the binder in the cathode layer may be 0.5% by mass or more, for example. When the percentage of the binder is too small, there is a possibility that an increase in resistance which is due to charge and discharge, cannot be sufficiently reduced. On the other hand, the percentage of the binder in the cathode layer may be 15% by mass or less, for example. When the percentage of the binder is too large, the percentage of the cathode active material is relatively small, and a low energy density may be obtained.

The thickness of the cathode layer is 0.1 μm or more and 1000 μm or less, for example. The thickness of the cathode layer may be 1 μm or more and 500 μm or less, or it may be 30 μm or more and 100 μm or less.

The method for producing the cathode layer is not particularly limited. For example, the production method may be a method including the steps of obtaining a cathode slurry by mixing the composite cathode active material, the electroconductive material and a solvent, applying the cathode slurry to a cathode collector and drying the applied slurry, thereby forming the cathode layer. To form the cathode layer, a press treatment (pressing the cathode layer in the thickness direction) may be performed. As the press treatment, examples include, but are not limited to, roller pressing and plate pressing.

As the solvent, examples include, but are not limited to, N-methylpyrrolidone (NMP), tetralin, diisobutyl ketone, butyl butyrate, mesitylene, heptane, dibutyl ether, decane, dodecane, isodecane and toluene. The solvent may contain two or more selected from these components.

As the material for the cathode collector, examples include, but are not limited to, SUS, Cr, Au, Pt, Zn, aluminum, copper, nickel, iron, titanium and carbon. The thickness of the cathode collector is 0.1 μm or more and 100 μm or less, for example. The form of the cathode collector may be a foil form, a plate form or the like. The plan view shape of the cathode collector is not particularly limited. As the shape, examples include, but are not limited to, a circular shape, an elliptical shape, a rectangular shape and any polygonal shape. The structure of the cathode collector may be such that a buffer layer, an elastic layer or a positive temperature coefficient (PTC) thermistor layer is disposed on the surface.

[Anode]

The anode includes the anode layer. As needed, it further includes an anode collector.

The anode layer is a layer containing at least an anode active material. As needed, the anode layer may contain at least one selected from the group consisting of an electrolyte, an electroconductive material and a binder. The area of the anode layer may be large compared to the cathode layer.

The anode active material may be in a particulate form or a sheet form, for example. The average particle diameter of the particles of the anode active material may be 1 μm or more, for example. The average particle diameter of the particles of the anode active material may be 30 μm or less, for example.

The anode active material may contain, for example, at least one selected from the group consisting of a carbon-based active material, a Li-based active material, a Si-based active material, a Si-C composite material and lithium titanate.

The carbon-based active material may contain, for example, at least one selected from the group consisting of graphite, soft carbon and hard carbon. The graphite is a general term for natural graphite and artificial graphite. The graphite may be a mixture of natural graphite and artificial graphite. For example, the mixing ratio (mass ratio) between the natural graphite and the artificial graphite may be as follows: "the natural graphite/the artificial graphite = 1/9 to 9/1" or "the natural graphite/the artificial graphite = 3/7 to 7/3".

As the Li-based active material, examples include, but are not limited to, Li, Li silicate and Li alloy.

As the Si-based active material, examples include, but are not limited to, Si, SiO and Si alloy.

The Si-C composite material indicates a composite material composed of a carbon-based active material (such as graphite) and a Si-based active material (such as Si). For example, fine Si particles may be dispersed in a carbon particle. For example, a Li silicate particle may be coated with a carbonaceous material (such as amorphous carbon).

As the electrolyte, electroconductive material and binder used in the anode layer, examples include, but are not limited to, those exemplified above as the electrolyte, electroconductive material and binder used in the cathode layer.

As the material for the anode collector, examples include, but are not limited to, SUS, aluminum, copper, nickel, iron, titanium and carbon. The thickness of the anode collector varies depending on the form. For example, the thickness may be in a range of from 1 μm to 50 μm. The form of the anode collector may be a foil form, a plate form or the like. The plan view shape of the anode collector is not particularly limited. As the shape, examples include, but are not limited to, a circular shape, an elliptical shape, a rectangular shape and any polygonal shape. The structure of the anode collector may be such that a buffer layer, an elastic layer or a PTC thermistor layer is disposed on the surface.

[Electrolyte layer]

The electrolyte layer is a layer formed between the cathode layer and the anode layer, and it contains at least an electrolyte. The electrolyte may be a solid electrolyte or a liquid electrolyte (an electrolytic solution).
The electrolyte layer may contain a solid electrolyte, an electrolytic solution and so on.
As the solid electrolyte, examples include, but are not limited to, those exemplified above as the solid electrolyte of the cathode layer.
As the electrolytic solution, an aqueous electrolytic solution, a non-aqueous electrolytic solution or the like can be used. They may be used alone or in combination of two or more.
The solvent of the aqueous electrolytic solution contains water as a main component. That is, when the whole amount of the solvent (a liquid component) constituting the electrolytic solution is determined as a reference (100% by mole), the water may account for 50% by mole or more, 70% by mole or more, or 90% by mole or more thereof. On the other hand, the upper limit of the proportion of the water in the solvent is not particularly limited.
While the solvent contains water as the main component, it may contain a solvent other than water. As the solvent other than water, examples include, but are not limited to, one or more selected from the group consisting of an ether, a carbonate, a nitrile, an alcohol, a ketone, an amine, an amide, a sulfur compound and a hydrocarbon. When the whole amount of the solvent (the liquid component) constituting the electrolytic solution is determined as a reference (100% by mole), the solvent other than water may be 50% by mole or less, may be 30% by mole or less, or may be 10% by mole or less.
The aqueous electrolytic solution used in the present disclosure contains an electrolyte. The electrolyte for the aqueous electrolytic solution may be selected from conventionally known electrolytes. As the electrolyte, examples include, but are not limited to, lithium salt, nitrate salt, acetate salt and sulfate salt of imidic acid compounds. More specifically, examples include, but are not limited to, lithium bis(fluorosulfonyl)imide (LiFSI), lithium bis(trifluoromethanesulfonyl)imide (LiTFSI), lithium bis(pentafluoroethanesulfonyl)imide (LiBETI), lithium bis(nonafluorobutanesulfonyl) imide, lithium nonafluoro-N-[(trifluoromethane)sulfonyl]butanesulfonylamide, lithium N,N-hexafluoro-1,3-disulfonylimide, $CH_3COOLi$, $LiPF_6$, $LiBF_4$, $Li_2SO_4$ and $LiNO_3$.
The concentration of the electrolyte in the aqueous electrolytic solution can be appropriately determined depending on desired battery properties, as long as the concentration does not exceed the saturation concentration of the electrolyte with respect to the solvent. This is because, when the electrolyte remains in a solid form in the aqueous electrolytic solution, the solid electrolyte may interfere with battery reaction.
For example, in the case of using LiTFSI as the electrolyte, the amount of the LiTFSI contained in the aqueous electrolytic solution may be 1 mole or more, 5 moles or more, or 7.5 moles or more per kg of the water. The upper limit of the amount is not particularly limited, and it may be 25 moles or less, for example.
As the non-aqueous electrolytic solution, one containing a lithium salt and a non-aqueous solvent is generally used.
As the lithium salt, examples include, but are not limited to, an inorganic lithium salt such as $LiPF_6$, $LiBF_4$, $LiClO_4$ and $LiAsF_6$, and an organic lithium salt such as $LiCF_3SO_3$, $LiN(SO_2CF_3)_2$(Li-TFSI), $LiN(SO_2C_2F_5)_2$ and $LiC(SO_2CF_3)_3$.
As the non-aqueous solvent, examples include, but are not limited to, ethylene carbonate (EC), propylene carbonate (PC), butylene carbonate (BC), dimethyl carbonate (DMC), diethyl carbonate (DEC), ethyl methyl carbonate (EMC), $\gamma$-butyrolactone, sulfolane, acetonitrile (AcN), dimethoxymethane, 1,2-dimethoxyethane (DME), 1,3-dimethoxypropane, diethyl ether, tetraethylene glycol dimethyl ether (TEGDME), tetrahydrofuran, 2-methyltetrahydrofuran, dimethylsulfoxide (DMSO) and mixtures thereof. From the viewpoint of obtaining high dielectric constant and low viscosity, the non-aqueous solvent may be a mixture of a cyclic carbonate compound having high dielectric constant and high viscosity (such as EC, PC and BC) and a chain carbonate compound having low dielectric constant and low viscosity (such as DMC, DEC and EMC), or it may be a mixture of EC and DEC.
The concentration of the lithium salt in the non-aqueous electrolytic solution may be from 0.3 M to 5 M, for example.
The non-aqueous electrolytic solution may contain an ionic liquid. The ionic liquid may contain, for example, at least one selected from the group consisting of sulfonium salt, ammonium salt, pyridinium salt, piperidinium salt, pyrrolidinium salt, morpholinium salt, phosphonium salt, imidazolium salt and derivatives thereof.
As the electrolyte layer, a separator which is impregnated with the above-mentioned electrolytic solution and is configured to prevent contact between the cathode layer and the anode layer, may be used.
The material for the separator is not particularly limited, as long as it is a porous film. As the material, examples include, but are not limited to, resins such as polyethylene (PE), polypropylene (PP), polyester, polyvinyl alcohol, cellulose and polyamide. Of them, the material for the separator may be polyethylene or polypropylene. The separator may have a single-layered structure or a multi-layered structure. As the separator having a multi-layered structure, examples include, but are not limited to, a separator having a two-layered structure such as PE/PP, and a separator having a three-layered structure such as PP/PE/PP and PE/PP/PE.

The separator may be a non-woven fabric such as a resin non-woven fabric or a glass fiber non-woven fabric.

[Solid electrolyte layer]

The electrolyte layer may be a solid electrolyte layer composed of a solid.
When the electrolyte layer is the solid electrolyte layer, the solid electrolyte layer contains a solid electrolyte. As needed, it contains a binder and so on.
As the solid electrolyte, examples include, but are not limited to, those exemplified above as the solid electrolyte of the cathode layer.
The solid electrolyte may be one solid electrolyte, or it may be two or more solid electrolytes. In the case of using two or more solid electrolytes, they may be mixed together, or they may be formed into layers to obtain a multi-layered structure.
The amount of the solid electrolyte in the solid electrolyte layer is not particularly limited. For example, it may be 50% by mass or more; it may be in a range of 60% by mass or more and 100% by mass or less; it may be in a range of 70% by mass or more and 100% by mass or less; or it may be 100% by mass. The electrolytic solution contained in the solid electrolyte layer may be less than 1% by mass with respect to the total amount of the solid electrolyte layer.
As the binder, examples include, but are not limited to, a binder that can be incorporated in the above-described cathode layer.
The content of the binder in the solid electrolyte layer may be from 0% by mass to 10% by mass with respect to the total amount of the solid electrolyte layer.
The thickness of the electrolyte layer is 0.1 μm or more and 1000 μm or less, for example. The thickness of the electrolyte layer may be 0.1 μm or more and 500 μm or less, or it may be 0.1 μm or more and 100 μm or less.
In the present disclosure, the battery may further include a fixing jig for applying a fixing pressure to the cathode layer, the electrolyte layer and the anode layer along the thickness direction. Especially when the electrolyte layer is the solid electrolyte layer, the fixing pressure may be applied for the formation of good ion conducting paths and electron conducting paths. The fixing pressure is 0.1 MPa or more, for example. The fixing pressure may be 1 MPa or more, or it may be 5 MPa or more. On the other hand, the fixing pressure is 100 MPa or less, for example. The fixing pressure may be 50 MPa or less, or it may be 20 MPa or less.

[Battery]

In the present disclosure, the type of the battery is not particularly limited. The battery of the present disclosure is typically a lithium ion battery. Also in the present disclosure, the battery may be a liquid battery in which the electrolyte layer contains an electrolytic solution, or it may be a solid-state battery in which the electrolyte layer contains a solid electrolyte. The solid-state battery may be a semi-solid-state battery or an all-solid-state battery. In the present disclosure, the semi-solid-state battery is a battery in which the electrolyte layer contains a solid component (such as an inorganic solid electrolyte) and a liquid component (such as a solvent and an electrolytic solution). In the present disclosure, the all-solid-state battery is a battery in which the electrolyte layer contains, as the electrolyte, only a solid component such as an inorganic solid electrolyte. In the present disclosure, the battery may be a primary battery or a secondary battery. Among them, the solid-state battery may be a secondary battery. This is because a secondary battery can be repeatedly charged and discharged, and it is useful as an in-vehicle battery, for example.
The form of the battery is not particularly limited. For example, it may be a coin form, a cylindrical form, a square form, a sheet form, a button form, a flat form or a laminate form.
When the battery is a cell stack consisting of stacked cells, the cell stack may be a monopolar cell stack or a bipolar cell stack.
As the applications of the battery, examples include, but are not limited to, the power source of vehicles such as a hybrid electric vehicle (HEV), a plug-in hybrid electric vehicle (PHEV), a battery electric vehicle (BEV), a gasoline vehicle and a diesel vehicle. Especially, the battery of the present disclosure may be used as the driving power supply of a hybrid electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as information processing devices.
The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

EXAMPLES

(Example 1)

[Synthesis of the precursor (transition metal hydroxide) of the cathode active material]

First, $NiSO_4$, $CoSO_4$ and $MnSO_4$ were dissolved in deionized water to prepare a raw material aqueous solution. The ratio between the Ni, Co and Mn in the raw material aqueous solution was at a molar ratio of Ni:Co:Mn = 85:7.5:7.5. The concentration of the raw material aqueous solution (the ratio of all the raw materials to the raw material aqueous solution) was 0.2% by mole.

<Hydrothermal synthesis (crystallization)>

A certain amount of $NH_3$ aqueous solution was put in a reaction container. While stirring the $NH_3$ aqueous solution with a stirrer, the atmosphere inside the reaction container was replaced with nitrogen. Then, a NaOH aqueous solution was put in the reaction container. While keeping the pH of the NaOH aqueous solution alkaline (pH 12) and controlling the temperature thereof at a certain temperature, the raw material aqueous solution and another $NH_3$ aqueous solution were added dropwise to the reaction container, thereby precipitating a transition metal hydroxide. The reaction temperature was 60°C, and the reaction time was 10 hours.

<Pre-sintering>

After the end of the precipitation reaction, the transition metal hydroxide was dehydrated and pre-sintered in the following temperature and pressure conditions.

Temperature: 120°C to 220°C
Time: 4 h to 10 h
Pressure: 0.2 MPa to 1.0 MPa

<Filtering>

After the pre-sintering, the transition metal hydroxide was dispersed in and washed with deionized water. Then, the washed transition metal hydroxide was filtered to obtain the transition metal hydroxide.

<Drying>

The obtained transition metal hydroxide was a dried at 110°C for 12 hours for water evaporation.

[Synthesis of the cathode active material]

<Mixing with Li raw material>

Using an agate mortar, the dried transition metal hydroxide was mixed with LiOH that was a lithium compound as the lithium source, thereby obtaining a mixture.

They were mixed so that the molar ratio (Li/NCM ratio) of the lithium compound to the total (NCM) of the Ni, Co and Mn contained in the transition metal hydroxide, was adjusted to 1.05.

<First sintering>

Using a furnace, the obtained mixture was sintered in an oxygen atmosphere at 900°C for 10 hours, thereby synthesizing a cathode active material ($Li_{1.05}Ni_{0.85}Co_{0.075}Mn_{0.075}O_2$).

[Production of the composite cathode active material]

<Second sintering>

Using an agate mortar, the obtained cathode active material was mixed with the W source that was $H_2WO_4$ classified through a 40 μm sieve, thereby obtaining a mixture. Using a furnace, the obtained mixture was sintered in an oxygen atmosphere at 600°C for 10 hours, thereby obtaining the second sintered product.

The W source and the cathode active material were mixed so that the molar ratio (W/NCM ratio) of the W to 1 mol

that was the total (NCM) of the Ni, Co and Mn contained in the cathode active material, was adjusted to 0.01.

<Third sintering>

Using an agate mortar, the second sintered product was mixed with the La source that was $La(OH)_3$ classified through a 40 μm sieve, thereby obtaining a mixture. Using a furnace, the obtained mixture was sintered in an oxygen atmosphere at 1000°C for 10 hours, thereby obtaining the third sintered product.

The La source and the cathode active material were mixed so that the molar ratio (La/NCM ratio) of the La to 1 mol that was the total (NCM) of the Ni, Co and Mn contained in the cathode active material, was adjusted to 0.01.

<Washing with water and filtering>

The third sintered product was ground in an agate mortar to a particle diameter of 0.2 mm or less, thereby obtaining a ground product. The ground product was dispersed in 500 mL of pure water to obtain a dispersion. The dispersion was vigorously stirred for one minute, thereby obtaining a slurry.

Then, the slurry was filtered through a Buchner funnel and a filter paper. A filtered product thus obtained was rinsed in 500 mL of pure water. A cake thus obtained cake was vacuumdried at 90°C, thereby obtaining a dried product.

<Grinding>

Using an agate mortar, the dried product was ground to a predetermined particle diameter, thereby obtaining the particles of the composite cathode active material.

(Example 2)

The composite cathode active material of Example 2 was produced in the same manner as Example 1, except for the following: in <Third sintering>, the La source and the cathode active material were mixed so that the molar ratio (La/NCM ratio) of the La to 1 mol that was the total (NCM) of the Ni, Co and Mn contained in the cathode active material, was adjusted to 0.005, and using the furnace, the obtained mixture was sintered in an oxygen atmosphere at 850°C for 10 hours, thereby obtaining the third sintered product.

(Example 3)

The composite cathode active material of Example 3 was produced in the same manner as Example 1, except for the following: in <Third sintering>, using the furnace, the obtained mixture was sintered in an oxygen atmosphere at 850°C for 10 hours, thereby obtaining the third sintered product.

(Example 4)

The composite cathode active material of Example 4 was produced in the same manner as Example 1, except for the following: in <Third sintering>, the La source and the cathode active material were mixed so that the molar ratio (La/NCM ratio) of the La to 1 mol that was the total (NCM) of the Ni, Co and Mn contained in the cathode active material, was adjusted to 1.0, and using the furnace, the obtained mixture was sintered in an oxygen atmosphere at 850°C for 10 hours, thereby obtaining the third sintered product.

(Example 5)

The composite cathode active material of Example 5 was produced in the same manner as Example 1, except for the following: in <Third sintering>, the La source and the cathode active material were mixed so that the molar ratio (La/NCM ratio) of the La to 1 mol that was the total (NCM) of the Ni, Co and Mn contained in the cathode active material, was adjusted to 2.0, and using the furnace, the obtained mixture was sintered in an oxygen atmosphere at 850°C for 10 hours, thereby obtaining the third sintered product.

(Example 6)

The composite cathode active material of Example 6 was produced in the same manner as Example 1, except for the following: in <Second sintering>, the W source and the cathode active material were mixed so that the molar ratio (W/NCM ratio) of the W to 1 mol that was the total (NCM) of the Ni, Co and Mn contained in the cathode active material, was

adjusted to 0.5; moreover, in <Third sintering>, the La source and the cathode active material were mixed so that the molar ratio (La/NCM ratio) of the La to 1 mol that was the total (NCM) of the Ni, Co and Mn contained in the cathode active material, was adjusted to 1.0, and using the furnace, the obtained mixture was sintered in an oxygen atmosphere at 850°C for 10 hours, thereby obtaining the third sintered product.

(Example 7)

The composite cathode active material of Example 7 was produced in the same manner as Example 1, except for the following: in <Second sintering>, the W source and the cathode active material were mixed so that the molar ratio (W/NCM ratio) of the W to 1 mol that was the total (NCM) of the Ni, Co and Mn contained in the cathode active material, was adjusted to 1.0; moreover, in <Third sintering>, the La source and the cathode active material were mixed so that the molar ratio (La/NCM ratio) of the La to 1 mol that was the total (NCM) of the Ni, Co and Mn contained in the cathode active material, was adjusted to 1.0, and using the furnace, the obtained mixture was sintered in an oxygen atmosphere at 850°C for 10 hours, thereby obtaining the third sintered product.

(Comparative Example 1)

The composite cathode active material of Comparative Example 1 was produced in the same manner as Example 1, except for the following: in [Production of the composite cathode active material], <Second sintering> and <Third sintering> were not carried out; moreover, in <First sintering> of [Synthesis of the cathode active material], the W source and the mixture of the transition metal hydroxide and the lithium compound were mixed so that the molar ratio (W/NCM ratio) of the W to 1 mol that was the total (NCM) of the Ni, Co and Mn contained in the transition metal hydroxide, was adjusted to 0.01, and using the furnace, the obtained mixture was sintered in an oxygen atmosphere at 1000°C for 10 hours, thereby obtaining the sintered product.

(Comparative Example 2)

The composite cathode active material of Comparative Example 2 was produced in the same manner as Example 1, except for the following: in [Production of the composite cathode active material], <Second sintering> and <Third sintering> were not carried out; moreover, in <First sintering> of [Synthesis of the cathode active material], the W source and the mixture of the transition metal hydroxide and the lithium compound were mixed so that the molar ratio (W/NCM ratio) of the W to 1 mol that was the total (NCM) of the Ni, Co and Mn contained in the transition metal hydroxide, was adjusted to 0.01; the La source and the mixture of the transition metal hydroxide and the lithium compound were mixed so that the molar ratio (La/NCM ratio) of the La to 1 mol that was the total (NCM) of the Ni, Co and Mn contained in the transition metal hydroxide, was adjusted to 0.01; and using the furnace, the obtained mixture was sintered in an oxygen atmosphere at 1000°C for 10 hours, thereby obtaining the sintered product.

(Comparative Example 3)

The composite cathode active material of Comparative Example 3 was produced in the same manner as Example 1, except for the following: in [Production of the composite cathode active material], <Second sintering> and <Third sintering> were not carried out; moreover, in <First sintering> of [Synthesis of the cathode active material], the W source and the mixture of the transition metal hydroxide and the lithium compound were mixed so that the molar ratio (W/NCM ratio) of the W to 1 mol that was the total (NCM) of the Ni, Co and Mn contained in the transition metal hydroxide, was adjusted to 0.01; the La source and the mixture of the transition metal hydroxide and the lithium compound were mixed so that the molar ratio (La/NCM ratio) of the La to 1 mol that was the total (NCM) of the Ni, Co and Mn contained in the transition metal hydroxide, was adjusted to 0.005; and using the furnace, the obtained mixture was sintered in an oxygen atmosphere at 850°C for 10 hours, thereby obtaining the sintered product.

(Comparative Example 4)

The composite cathode active material of Comparative Example 4 was produced in the same manner as Example 1, except for the following: in [Production of the composite cathode active material], <Second sintering> and <Third sintering> were not carried out; moreover, in <First sintering> of [Synthesis of the cathode active material], the W source and the mixture of the transition metal hydroxide and the lithium compound were mixed so that the molar ratio (W/NCM ratio) of the W to 1 mol that was the total (NCM) of the Ni, Co and Mn contained in the transition metal hydroxide, was adjusted to 0.01; the La source and the mixture of the transition metal hydroxide and the lithium compound were mixed so that the molar ratio (La/NCM ratio) of the La to 1 mol that was the total (NCM) of the Ni, Co and Mn contained in the

transition metal hydroxide, was adjusted to 0.01; and using the furnace, the obtained mixture was sintered in an oxygen atmosphere at 850°C for 10 hours, thereby obtaining the sintered product.

[SEM-EDX analysis]

The following results were obtained by cross-sectional observation and elemental analysis of the composite cathode active materials of in Examples 1 to 7 and Comparative Example s 1 to 4, which were conducted by SEM-EDX. The results are also shown in FIG. 2.

The cathode active material contained in each of the composite cathode active materials of Examples 1 to 7 and Comparative Examples 1 to 4, was confirmed to contain Ni, Co and Mn.

By mapping images, the compound A containing La, Ni and O was confirmed in Examples 1 to 7 and Comparative Examples 2 to 4.

A particulate compound was confirmed in Examples 1 to 7 and Comparative Examples 3 and 4. By mapping images, the particulate compound was confirmed to be the compound A containing La, Ni and O.

The compound A contained in each of the composite cathode active materials of Examples 1 to 7 and Comparative Examples 3 and 4 was confirmed to be independently present as isolated particles. It is thought that the electron conductivity increasing effect by the compound A is easily obtained since the compound A is independently present as isolated particles.

The compound A contained in the composite cathode active material of Comparative Example 2 was confirmed to be present in the coating layer form on the surface of the primary particle that was the cathode active material. It is thought that due to the high temperature sintering at 1000°C, the compound B was transformed into isolated particles, and due to the compound B transformed into the isolated particles, the compound A was formed in the coating layer form on the surface of the primary particle that was the cathode active material. It is thought that when the compound A is formed in the coating layer form on the surface of the primary particle that is the cathode active material, contact is less likely to be obtained between the compound B and the primary particle that is the cathode active material, and the Li conducting effect by the compound B is decreased.

By cross-sectional image analysis by SEM-EDX, the isolated particles (the compound A) of Examples 1 to 7 were confirmed to have an average particle diameter of 0.1 μm. By cross-sectional image analysis by SEM-EDX, the isolated particles (the compound A) of Comparative Examples 3 and 4 were confirmed to have an average particle diameter of 5 μm. By cross-sectional image analysis by SEM-EDX, the primary particle that was the cathode active material contained in each of the composite cathode active materials of Examples 1 to 7 and Comparative Examples 1 to 4, was confirmed to have a particle diameter of 0.5 μm.

[TEM-EDX analysis]

The following results were obtained by cross-sectional image analysis and elemental analysis of the composite cathode active materials of Examples 1 to 7 and Comparative Examples 1 to 4 by TEM-EDX. The results are also shown in Table 2.

By mapping images, the compound B containing Li, W and O was confirmed in the composite cathode active materials of Examples 1 to 7 and Comparative Examples 1 to 4.

The compound B contained in each of the composite cathode active materials of Examples 1 to 7 was confirmed to be present in the coating layer form since, by TEM-EDX, a W-concentrated region was present on the surface of the primary particle that was the cathode active material. It is thought that due to the sintering at 600°C, the sintering of the compound B was not promoted, and the compound B was formed in the coating layer form on the surface of the primary particle that was the cathode active material. It is thought that when the compound B is formed in the coating layer form on the surface of the primary particle, contact is obtained between the compound B and the primary particle that is the cathode active material, and the Li conducting effect by the compound B is increased.

By mapping images, the compound B contained in each of the composite cathode active materials of Comparative Examples 1 to 4 was confirmed to be independently present as isolated particles. It is thought that due to the sintering at a high temperature at 850°C or more in one step, the sintering of the compound B was promoted, and the compound B was transformed into isolated particles. It is thought that when the compound B is transformed into isolated particles, contact is less likely to be obtained between the compound B and the primary particle that is the cathode active material, and the Li conducting effect by the compound B is decreased.

By the cross-sectional image analysis by TEM-EDX, the compound B contained in each of the composite cathode active materials of Examples 1 to 7 and Comparative Examples 1 to 4 was confirmed to be $Li_6WO_6$.

[XRD measurement]

By Rigaku Smart-Lab, the XRD patterns of the composite cathode active materials of Examples 1 to 7 and Comparative Examples 1 to 4 were obtained. More specifically, a measurement sample was installed in a glass sample holder and measured. The measurement conditions are as follows.

2 θ measurement range: 10° to 120°
X-ray: Cu-Kα (A = 1.5418 Å)
Scanning speed: 2.0°/min
Temperature: Room temperature

As the result of XRD measurement, the cathode active material contained in each of the composite cathode active materials of Examples 1 to 7 and Comparative Examples 1 to 4 was confirmed to include a layered rock salt-type crystal phase belonging to space group R-3m.

Compound identification was carried out by use of Rigaku Smart-Lab Studio II on the diffraction data obtained by the XRD measurement. As a result, a peak derived from a LaNiO crystal phase ($La_4LiNiO_8$) was confirmed in the composite cathode active materials of Examples 1 to 7 and Comparative Examples 2 to 4.

In the composite cathode active materials of Comparative Examples 1 to 4, a peak derived from a LiWO crystal phase ($Li_6WO_6$) was confirmed. Meanwhile, in the composite cathode active materials of Examples 1 to 7, a peak derived from a LiWO crystal phase was not confirmed. Accordingly, it is thought that the compound B present on the surface of the composite cathode active materials of Examples 1 to 7 is amorphous.

[Production of cell (small laminated cell)]

The small laminated cell of Example 1 was produced as follows by use of the composite cathode active material of Example 1.

First, a cathode mixture paste containing the composite cathode active material and Acetylene Black (an electroconductive material) was applied to a surface of a metal foil (a cathode collector) by a film applicator with film thickness adjustability (manufactured by Allgood Co., Ltd.) Then, the applied paste was dried by a dryer at 80°C for 5 minutes to form a cathode layer on the cathode collector, thereby producing a cathode.

Next, an anode mixture paste containing natural graphite (an anode active material) was applied to a surface of a metal foil (an anode collector) by a film applicator with film thickness adjustability (manufactured by Allgood Co., Ltd.) Then, the applied paste was dried by a dryer at 80°C for 5 minutes to form an anode layer on the anode collector, thereby producing an anode.

As an electrolytic solution, a 1 M $LiPF_6$ solution was prepared, which contained an electrolyte that was $LiPF_6$ and a solvent that was a mixture of ethylene carbonate (EC), dimethyl carbonate (DMC) and ethyl methyl carbonate (EMC) at a ratio of EC/DMC/EMC = 3/4/3 (unit: % by volume).

The cathode, a separator and the anode were stacked, and the separator was impregnated with the electrolytic solution, thereby producing the small laminated cell of Example 1. In the same manner as Example 1, the small laminated cells of Examples 2 to 7 and Comparative Examples 1 to 4 were also produced.

[Cell evaluation]

The produced small laminated cells were evaluated for IV resistance before and after a cycle test of 100 cycles. The 100 cycles of the cycle test were conducted in the following conditions.

<Cycling conditions>

Voltage range: 3.0 V to 4.3 V
C rate: 0.3 C
Mode: CC charge and discharge
Temperature: 50°C

[IV resistance measurement]

Cell voltage was adjusted in a voltage range of from 3.0 V to 4.3 V to achieve a SOC of 50%, while considering the

upper limit voltage of 4.3 V as a SOC of 100%.

Cell voltage drop (V) was measured at C rates of 0.1 C, 0.3 C, 0.5 C, 0.7 C and 1.0 C, when the cell was discharged for 10 seconds at 0°C.

The relationship between the current value and voltage drop (V) of the cell was plotted, and the slope of an approximate straight line created by a linear function was considered as IV resistance.

[Calculation of IV resistance increase rate after the 100 cycles]

The above-described measurement was carried out before and after the cycle test of the 100 cycles. The amount of change before and after the cycle test was calculated and used as the resistance increase rate.

IV resistance increase rate (%) after the 100 cycles = (IV resistance after the cycle test)/(IV resistance before the cycle test)×100

In the present disclosure, the IV resistance increase rate that was normalized using Comparative Example 1 as a reference, was calculated. The results are shown in Table 2.

Table 1

| | Cathode active material | | | | Compound A | | Compound B | |
|---|---|---|---|---|---|---|---|---|
| | Li/NCM ratio | Ni/NCM ratio | Co/NCM ratio | Mn/NCM ratio | Type | La/NCM ratio | Type | W/NCM ratio |
| Comparative Example 1 | 1.050 | 0.850 | 0.075 | 0.075 | - | - | $Li_6WO_6$ | 0.010 |
| Comparative Example 2 | 1.050 | 0.850 | 0.075 | 0.075 | $La_4LiNiO_8$ | 0.010 | $Li_6WO_6$ | 0.010 |
| Comparative Example 3 | 1.050 | 0.850 | 0.075 | 0.075 | $La_4LiNiO_8$ | 0.005 | $Li_6WO_6$ | 0.010 |
| Comparative Example 4 | 1.050 | 0.850 | 0.075 | 0.075 | $La_4LiNiO_8$ | 0.010 | $Li_6WO_6$ | 0.010 |
| Example 1 | 1.050 | 0.850 | 0.075 | 0.075 | $La_4LiNiO_8$ | 0.010 | $Li_6WO_6$ | 0.010 |
| Example 2 | 1.050 | 0.850 | 0.075 | 0.075 | $La_4LiNiO_8$ | 0.005 | $Li_6WO_6$ | 0.010 |
| Example 3 | 1.050 | 0.850 | 0.075 | 0.075 | $La_4LiNiO_8$ | 0.010 | $Li_6WO_6$ | 0.010 |
| Example 4 | 1.050 | 0.850 | 0.075 | 0.075 | $La_4LiNiO_8$ | 1.000 | $Li_6WO_6$ | 0.010 |
| Example 5 | 1.050 | 0.850 | 0.075 | 0.075 | $La_4LiNiO_8$ | 2.000 | $Li_6WO_6$ | 0.010 |
| Example 6 | 1.050 | 0.850 | 0.075 | 0.075 | $La_4LiNiO_8$ | 1.000 | $Li_6WO_6$ | 0.500 |
| Example 7 | 1.050 | 0.850 | 0.075 | 0.075 | $La_4LiNiO_8$ | 1.000 | $Li_6WO_6$ | 1.000 |

Table 2

| | Synthesis method | First sintering temperature (°C) | Second sintering temperature (°C) | Third sintering temperature (°C) | The form of Compound A | The form of Compound B | Normalized resistance increase rate (%) after 100 cycles |
|---|---|---|---|---|---|---|---|
| Comparative Example 1 | One-step sintering | 1000 | - | - | - | Isolated particles | 100 |
| Comparative Example 2 | One-step sintering | 1000 | - | - | Coating layer | Isolated particles | 98 |
| Comparative Example 3 | One-step sintering | 850 | - | - | Isolated particles | Isolated particles | 93 |

(continued)

| | Synthesis method | First sintering temperature (°C) | Second sintering temperature (°C) | Third sintering temperature (°C) | The form of Compound A | The form of Compound B | Normalized resistance increase rate (%) after 100 cycles |
|---|---|---|---|---|---|---|---|
| Comparative Example 4 | One-step sintering | 850 | - | - | Isolated particles | Isolated particles | 90 |
| Example 1 | Three-step sintering | 900 | 600 | 1000 | Isolated particles | Coating layer | 93 |
| Example 2 | Three-step sintering | 900 | 600 | 850 | Isolated particles | Coating layer | 88 |
| Example 3 | Three-step sintering | 900 | 600 | 850 | Isolated particles | Coating layer | 84 |
| Example 4 | Three-step sintering | 900 | 600 | 850 | Isolated particles | Coating layer | 81 |
| Example 5 | Three-step sintering | 900 | 600 | 850 | Isolated particles | Coating layer | 90 |
| Example 6 | Three-step sintering | 900 | 600 | 850 | Isolated particles | Coating layer | 79 |
| Example 7 | Three-step sintering | 900 | 600 | 850 | Isolated particles | Coating layer | 83 |

Based on the results shown in Tables 1 and 2, the following comparisons were made.

(Comparison between Comparative Examples 1 and 2)

As is clear from Table 2, the resistance increase rate of the battery using the composite cathode active material of Comparative Example 2 after the 100 cycles, is small compared to that of the battery using the composite cathode active material of Comparative Example 1 after the 100 cycles. Accordingly, it is revealed that the resistance increase rate due to battery charge and discharge is decreased by containing the certain amount of the compound A in the composite cathode active material.

(Comparison between Example 1 and Comparative Example 2)

As is clear from Table 2, the resistance increase rate of the battery using the composite cathode active material of Example 1 after the 100 cycles, is small compared to that of the battery using the composite cathode active material of Comparative Example 2 after the 100 cycles. Accordingly, it is revealed that when the ratio of the La to NCM in the composite cathode active material (the La/NCM ratio) is 0.01, the resistance increase rate due to battery charge and discharge is decreased by the presence of the compound A that is present as the isolated particles.

(Comparison between Example 2 and Comparative Example 3)

As is clear from Table 2, the resistance increase rate of the battery using the composite cathode active material of Example 2 after the 100 cycles, is small compared to that of the battery using the composite cathode active material of Comparative Example 3 after the 100 cycles. Accordingly, it is revealed that when the ratio of the La to NCM in the

composite cathode active material (the La/NCM ratio) is 0.005, the resistance increase rate due to battery charge and discharge is decreased by the presence of the compound B that is present in the coating layer form on the surface of the primary particle that is the cathode active material.

(Comparison between Example 3 and Comparative Example 4)

As is clear from Table 2, the resistance increase rate of the battery using the composite cathode active material of Example 3 after the 100 cycles, is small compared to that of the battery using the composite cathode active material of Comparative Example 4 after the 100 cycles. Accordingly, it is revealed that the resistance increase rate due to battery charge and discharge is decreased when the compound A is obtained at a sintering temperature of 850°C and the ratio of the La to NCM in the composite cathode active material (the La/NCM ratio) is 0.01.

(Comparison between Examples 4 and 3)

As is clear from Table 2, the resistance increase rate of the battery using the composite cathode active material of Example 4 after the 100 cycles, in which the ratio of the La to NCM in the composite cathode active material (the La/NCM ratio) is 1.000, is small compared to that of the battery using the composite cathode active material of Example 3 after the 100 cycles, in which the ratio of the La to NCM in the composite cathode active material (the La/NCM ratio) is 0.01. Accordingly, it is revealed that when the compound A is obtained at a sintering temperature of 850°C, the resistance increase rate due to battery charge and discharge is further decreased in the case where the ratio of the La to NCM in the composite cathode active material (the La/NCM ratio) is 1.000, compared to the case where the La/NCM ratio is 0.01.

(Comparison between Examples 5 and 2)

As is clear from Table 2, the resistance increase rate of the battery using the composite cathode active material of Example 5 after the 100 cycles, in which the ratio of the La to NCM in the composite cathode active material (the La/NCM ratio) is 2.000, is large compared to that of the battery using the composite cathode active material of Example 2 after the 100 cycles, in which the ratio of the La to NCM in the composite cathode active material (the La/NCM ratio) is 0.005. Accordingly, it is revealed that when the compound A is obtained at a sintering temperature of 850°C, the resistance increase rate due to battery charge and discharge is further decreased in the case where the ratio of the La to NCM in the composite cathode active material (the La/NCM ratio) is 0.005, compared to the case where the La/NCM ratio is 2.000. It is thought that lithium conduction was inhibited in Example 5 since the amount of the La contained in the composite cathode active material was larger than Example **2.**

(Comparison between Examples 6, 7 and 4)

As is clear from Table 2, the resistance increase rate of the battery using the composite cathode active material of Example 6 after the 100 cycles, in which the ratio of the W to NCM in the composite cathode active material (the W/NCM ratio) is 0.500, is large compared to that of the battery using the composite cathode active material of Example 4 after the 100 cycles, in which the ratio of the W to NCM in the composite cathode active material (the W/NCM ratio) is 0.010, and that of the battery using the composite cathode active material of Example 7 after the 100 cycles, in which the ratio of the W to NCM in the composite cathode active material (the W/NCM ratio) is 1.000. Accordingly, it is revealed that when the compound A is obtained at a sintering temperature of 850°C and the ratio of the La to NCM in the composite cathode active material (the La/NCM ratio) is 1.000, the resistance increase rate due to battery charge and discharge is further decreased in the case where the ratio of the W to NCM in the composite cathode active material (the W/NCM ratio) is 0.010, compared to the case where the W/NCM ratio is 1.000, and the resistance increase rate due to battery charge and discharge is further decreased in the case where the ratio of the ratio of the W to NCM in the composite cathode active material (the W/NCM ratio) is 0.500, compared to the case where the W/NCM ratio is 0.010. It is thought that electron conduction was inhibited in Example 7 since the amount of the W contained in the composite cathode active material was larger than Examples 4 and 6.

REFERENCE SIGNS LIST

10. Primary particle (cathode active material)
20. Compound B
30. Compound A

100. Composite cathode active material

## Claims

**1.** A composite cathode active material (100) comprising a cathode active material, a compound A (30) comprising La, Ni and O, and a compound B (20) comprising Li, W and O,

wherein the cathode active material is a crystalline primary particle (10) comprising Li, a transition metal and O;
wherein the cathode active material is a single-crystal type active material comprising the primary particle (10);
wherein the compound B (20) is present in a coating layer form on at least part of a surface of the primary particle (10); and
wherein the compound A (30) is independently present as isolated particles.

**2.** The composite cathode active material (100) according to claim 1, wherein a content of the La in the composite cathode active material (100) is 0.005 mol or more and 2.000 mol or less with respect to 1 mol that is a total of Ni, Co and Mn contained in the cathode active material.

**3.** The composite cathode active material (100) according to claim 1 or 2, wherein a content of the W in the composite cathode active material (100) is 0.010 mol or more and 1.000 mol or less with respect to 1 mol that is a total of Ni, Co and Mn contained in the cathode active material.

**4.** The composite cathode active material (100) according to any one of claims 1 to 3, wherein a particle diameter of the primary particle (10) that is the cathode active material is 0.5 μm or more.

**5.** The composite cathode active material (100) according to any one of claims 1 to 4, wherein an average particle diameter of the isolated particles that is the compound A (30) is 0.1 μm or more and 20 μm or less.

**6.** The composite cathode active material (100) according to any one of claims 1 to 5, wherein the compound A (30) is $La_4LiNiO_8$.

**7.** The composite cathode active material (100) according to any one of claims 1 to 6, wherein the compound B (20) is at least one selected from the group consisting of $Li_2WO_4$ and $Li_6WO_6$.

**8.** A cathode layer comprising the composite cathode active material (100) defined by any one of claims 1 to 7.

**9.** A battery comprising a cathode layer comprising the composite cathode active material (100) defined by any one of claims 1 to 7.

**10.** A method for producing the composite cathode active material (100) defined by any one of claims 1 to 7, the method comprising:

a first sintering step of obtaining the cathode active material by sintering a first mixture of a transition metal hydroxide, which is a precursor of the cathode active material, and a lithium compound at a temperature of from 800°C to 1000°C,
a second sintering step of obtaining a sintered product comprising, by sintering a second mixture of the cathode active material and a W source that is a raw material for the compound B (20) at a temperature of from 500°C to 700°C, the cathode active material and the compound B (20) that is present in the coating layer form on at least part of the surface of the primary particle (10), and
a third sintering step of obtaining the composite cathode active material (100) by sintering a third mixture of the sintered product and a La source that is a raw material for the compound A (30) at a temperature of from 800°C to 1100°C.

FIG. 1

100
10
30
20

Europäisches
Patentamt
European
Patent Office
Office européen
des brevets

# EUROPEAN SEARCH REPORT

Application Number
EP 26 15 8195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG HUJUN ET AL: "Perovskite-coated small-size single-crystalline W-doped Ni-rich cathodes with greatly enhanced power density for Li-ion batteries", JOURNAL OF MATERIALS CHEMISTRY A, vol. 12, no. 36, 1 September 2024 (2024-09-01), pages 24542-24548, XP093416007, GB ISSN: 2050-7488, DOI: 10.1039/d4ta04197f Retrieved from the Internet: URL:https://pubs.rsc.org/ta/article/12/36/24542/874266/Perovskite-coated-small-size-single-crystalline-W> * results and discussion * ----- | 1-10 | INV. C01G53/506 C01G53/84 H01M4/525 |
| A | EP 3 996 171 A1 (BASF SHANSHAN BATTERY MAT NINGXIANG CO LTD [CN]) 11 May 2022 (2022-05-11) * paragraph [0010]; example 3 * ----- | 1-10 | |
| A | JP 2019 102129 A (TOYOTA MOTOR CORP; SUMITOMO METAL MINING CO) 24 June 2019 (2019-06-24) * paragraphs [0023], [0059], [0068]; example 3 * ----- | 1-10 | TECHNICAL FIELDS SEARCHED (IPC) C01G H01M |
| A | CN 109 742 375 A (BEIJING INSTITUTE TECH) 10 May 2019 (2019-05-10) * claims * ----- | 1-10 | |
| A | CN 113 445 127 B (UNIV CENTRAL SOUTH) 15 July 2022 (2022-07-15) * paragraph [0023]; figure 2; example 2 * ----- | 1-10 | |

The present search report has been drawn up for all claims

1

| Place of search | Date of completion of the search | Examiner |
|---|---|---|
| Munich | 14 July 2026 | Nobis, Barbara |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 26 15 8195

This annex lists the patent family members relating to the patent documents cited in the above-mentioned European search report. The members are as contained in the European Patent Office EDP file on
The European Patent Office is in no way liable for these particulars which are merely given for the purpose of information.

14-07-2026

| Patent document cited in search report | Publication date | Patent family member(s) | Publication date |
|---|---|---|---|
| EP 3996171 A1 | 11-05-2022 | CN 112186138 A | 05-01-2021 |
| | | EP 3996171 A1 | 11-05-2022 |
| | | JP 7318020 B2 | 31-07-2023 |
| | | JP 2022542774 A | 07-10-2022 |
| | | KR 20220019046 A | 15-02-2022 |
| | | US 2022416236 A1 | 29-12-2022 |
| | | WO 2021000868 A1 | 07-01-2021 |
| JP 2019102129 A | 24-06-2019 | CN 109841808 A | 04-06-2019 |
| | | JP 6904892 B2 | 21-07-2021 |
| | | JP 2019102129 A | 24-06-2019 |
| | | KR 20190062278 A | 05-06-2019 |
| | | US 2019165372 A1 | 30-05-2019 |
| CN 109742375 A | 10-05-2019 | NONE | |
| CN 113445127 B | 15-07-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022542774 W
- JP 2024511223 W